# EUROPEAN PATENT SPECIFICATION

(11) **EP 2 663 586 B1**
(45) Date of publication and mention of the grant of the patent: **09.08.2017**
(21) Application number: 12703578.0
(22) Date of filing: 16.01.2012
(51) Int. Cl.: C08G 65/336, C09J 163/00, C09J 171/02

(54) **REMOVABLE ADHESIVE/SEALANT COMPOSITION**
ENTFERNBARE KLEBE-/DICHTUNGSMITTELZUSAMMENSETZUNG
COMPOSITION D'ADHÉSIF/AGENT D'ÉTANCHÉITÉ AMOVIBLE

(30) Priority: 14.01.2011 ES 201130041
(43) Date of publication of application: 20.11.2013
(73) Proprietor: Ceys, S. A., 08907 L'Hospitalet de Llobregat (ES)
(72) Inventor: BARQUEROS SÁNCHEZ, Bernardo, E-08907 L'Hospitalet de Llobregat (ES); MATEO MARQUÉS, Oscar, E-08907 L'Hospitalet de Llobregat (ES)
(74) Representative: Oficina Ponti, SLP
(86) International application number: PCT/IB2012/050188
(87) International publication number: WO 2012/095826

(56) References cited:
- EP-A1- 2 133 399
- WO-A1-2010/057796
- US-A1- 2009 131 591
- US-A1- 2009 156 737
- DATABASE WPI Week 201037 Thomson Scientific, London, GB; AN 2010-E85957 XP002686868, & JP 2010 100835 A (ASAHI GLASS CO LTD) 6 May 2010 (2010-05-06)

## Description

### FIELD OF THE INVENTION

The present invention relates to the field of adhesives. In particular, the present invention relates to a use of a characterised in that it is simultaneously adhesive and sealant, and, moreover, it is removable. The present invention also relates to the process of obtaining it and to the different uses thereof.

### BACKGROUND

The importance of adhesives in the modern world is well-known, at both the industrial and professional levels, and for children. They are used in multiple manufacturing processes to create bonds, for example, in sectors such as the graphic arts, paper and cardboard conversion, packing and packaging, furniture and wood, the automobile industry, etc. They are also very important in the installation or bonding of materials, especially in construction (adhesives for pavings and coatings such as fitted carpets, PVC, linoleum, etc.). Even at the domestic or children's level, their use is quite widespread. Obviously, due to this large variety of fields of application, their composition is quite variable. Thus, we may have solid, liquid, acrylic-type, cyanoacrylate, epoxy, etc., adhesives. Removable polyether-silane based adhesive compositions are disclosed in the prior art in EP-A-2133399 and JP-A-2010100835. At the technical level, an adhesive is defined as a mixture of substances that is useful to keep two substrates bonded by means of surface interactions. These interactions may be physical or chemical (chemical bonds). The bonding mechanism of an adhesive is based on an equilibrium between two forces:
- Adhesive force (Af): this is the force that must be exerted in order to separate the adhesive from the surface.
- Cohesive force (Cf): this is the force that must be exerted in order to break the internal structure of the adhesive.

A good adhesive is characterised by causing cohesive-type breakages, i.e. the adhesive must be broken before separating from the substrate. In some cases, it may be of interest that breakages of the substrate occur (for structural adhesives).

A cohesive breakage is characterised by ocurring in a system wherein Cf < Af.

This may be achieved by using adhesives with a low Cf: low-resistance bonds or systems that supply very high Afs (by incorporating adhesion promoters, for example).

On the other hand, another type of substances related to adhesion are sealants or sealers. These are products that, when applied on a joint, form a barrier against the passage of certain substances or materials. By definition, it is a mixture of substances with the purpose of binding two substrates, but maintaining their independence of movement; normally, a sealant is selected when a watertight joint between two substrates is necessary to be created.

The bonding mechanisms of a sealant are the same as the mechanisms for an adhesive.

Sealants are usually characterised by having Cf < Af, for which reason they become deformed prior to being removed.

The force module necessary to deform the material is usually called elastic modulus of the sealant.

Moreover, a good sealant must not undergo shrinkage or contraction, and must maintain its technical properties and aesthetic appearance for as long as possible.

At the market level, there currently already exist polyvalent adhesives, sealants with different elastic moduli and products that combine both properties. This technology is very valued by consumers, since it makes it possible to have the maximum versatility in a single product and to form adhesive bonds on different materials, as well as create flexible hermetic joints between two elements.

However, there are applications which, for technical reasons (need to replace the bonded material, recycling of elements bonded by adhesion or sealing) or aesthetic reasons (visual degradation of the sealing material), require that the applied product have a bond that is removable from the substrate. Consequently, there is a need in the state of the art for a product that is simultaneously adhesive and sealing, and, therefore, may act only as an adhesive, only as a sealant or use both properties, and, moreover, is removable, i.e. that the parts initially bonded may be recovered (in the event that it is used as an adhesive), or the hardened flange applied on a joint may be easily removed, leaving the substrates clean of sealing product (in the event that it is used as a sealant).

Therefore, a first objective is to disclose a use of a composition that contributes to overcome the problem of obtaining elastic bonds (whether bonded by adhesion or sealing), by means of a single product which makes it possible to separate the bonded parts and remove the hardened sealing joint by simply applying a removal force perpendicular to the sealed joint, when necessary, without using chemical products or tools that may damage the substrate. In other words, a composition is provided which is simultaneously adhesive and sealing, being able to act only as an adhesive, only as a sealant or simultaneously as both, and which, in addition, is removable.

The use of the composition of the present invention provides adhesive breakages, since the Cf of the cured product > Af, i.e. the cured product is removed prior to becoming deformed; this makes it possible to remove it from the substrate without leaving any residues. Nonetheless, the system ensures adhesive forces that are sufficiently high to ensure a minimum adhesion resistance, in the event that it is used as an adhesive, or a minimum adhesion to the substrate, in the event that it is used as a sealant, thereby guaranteeing a correct behaviour for the user.

The resulting product provides sufficiently high tensile strength and adherences, such that it exceeds a lower strength limit (valued at 15 kg/cm²), but maintaining the property of being easily removable.

A second objective relates to a a process for the manufacturing of the composition of the present invention.

A third objective is to disclose the different uses of the composition of the present invention.

### Summary of the invention

The present invention relates to an adhesive and/or sealant composition comprising a polyether containing silane groups in the end of the chain or a polyether containing alcoxysilane radicals, as defined in the present claims which is removable.

The present invention also relates to the process for the preparation of the composition of the present invention.

### Brief description of the figures

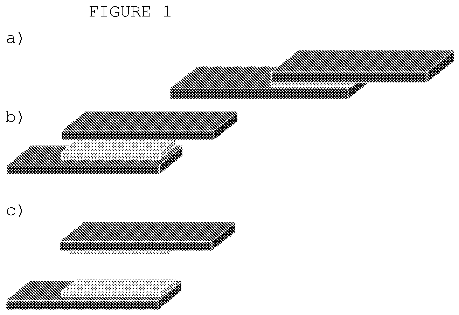

Figure 1a) schematically represents an adhesive bond.
Figure 1b) schematically represents an adhesive breakage where the adhesive force is lower than the cohesive force (Af < Cf).
Figure 1c) schematically represents a cohesive breakage where the adhesive force is higher than the cohesive force (Cf < Af).
Figure 2 represents a dumbbell test strip used in the examples.

### Description of the invention

The present invention relates to an use of containing silane groups in the end of the chain or a polyether containing alcoxysilane radicals, as defined in present claims which is removable. Therefore the composition used in the present invention has itself both properties as adhesive and sealant and can be used as an adhesive composition, a sealant composition or an adhesive and sealant composition. The present composition presents also the property that is removable as defined below.

In order to contribute to construe the meaning of the different terms used in the present invention, we indicate below the meaning used within the context thereof.

The term "adhesive", within the context of the present invention, refers to the ability of the composition of the present invention to keep two substrates bonded by means of surface interactions.

The term "sealer" or "sealant", within the context of the present invention, refers to the ability of the composition of the present invention to bind two substrates, but maintaining their independence of movement.

The term "removable" or "removability" refers to the ability to extract the adhesive/sealant composition in a simple manner, manually, by applying a stress perpendicular to the surface over which the adhesive/sealant composition has been applied, in order to thereby recover the object or objects.

The term "polyether containing silane groups in the end of the chain" refers to a structure of the type that has a main chain of dimethoxysilyl-terminated polypropylene oxide.

The term "polyether containing alcoxysilane radical" refers to a structure of the dimethoxy(methyl)silylmethylcarbamate-terminated polyether type.

The composition used in the present invention further comprises at least a hydrophobic precipitated silica, at least one plasticiser, at least one polyamide-based rheology modifier, at least one moisture absorber, at least one aminosilane-type adhesion promoter, at least one colouring agent and at least one ultraviolet filter. The term "at least" means that each of these components may have different types included within the same concept, i.e. there may be, for example, a type A colouring agent and a type B colouring agent.

In another preferred embodiment, the composition of the present invention comprises, in addition to the components indicated in the preceding paragraph, one or more of at least the following: at least one biocide, at least one rheological additive with a hydrophilic pyrogenic silica base, at least one tin catalyst and at least one dimensional stabiliser for silica. This means that, in addition to the components of the preceding paragraph, the composition may contain at least one of the following additional components: biocide, rheological additive with a hydrophilic pyrogenic silica base, tin catalyst and dimensional stabiliser for silica. The term "at least" means that each of these additional components may have different types included within the same concept, i.e. there may be a type A biocide and a type B biocide. It is also worth noting that these additional components are mutually independent, i.e., for example, there may be a combination of two of them, of three of them, etc. or of all of them.

In the present invention, "dimensional stabiliser for silica" is understood to be a wetting and dispersing additive based on a solution of a copolymer containing charge-affinic groups in a solvent of the methoxypropyl acetate type, commercially Disperbyk 103.

"Ultraviolet filter" is understood to mean a low-molecular-weight HALS-type (Hindered Amine Light Stabilizer) light stabiliser or a benzotriazole-based UV-radiation absorbing filter.

In a more preferred embodiment, the plasticiser used in the composition according to the embodiments of the present invention is selected from DINP, DINCH, DIUP and benzoates, where DINP represents di-isononylphthalate, DINCH represents 1,2-cyclohexane dicarboxylic acid and DIUP represents di-isoundecylphthalate.

In another preferred embodiment, the rheology modifier used in the composition according to the embodiments of the present invention is selected from micronised polyamide and heat-activateable castor oil derivatives.

In another preferred embodiment, the colouring agent used in the composition according to the embodiments of the present invention is selected from titanium dioxide and an iron oxide-based pigment.

In a more preferred embodiment, the composition presents the following formulation, comprising (% by weight):
50-57: Dimethoxy(methyl)silylmethylcarbamate-terminated polyether (Silane-terminated polyether)
0-1.5: Hidrophilic pyrogenic silica with a specific surface area of 150 m²/g (rheological additive with a Hidrophylic pyrogenic silica base)
14-20: Hydrophobic amorphous colloidal silica (SiO₂ 80%-90%, polyalkylsiloxane 10%-20%) (hydrophobic precipitated silica)
0-0.25: Dioctyl tin dilaurate (catalyst)
8-15: DINP (plasticiser)
0.1-5: Micronised polyamide (rheology modifier)
2-5: Vinyltrimethoxysilane (moisture absorber)
1-2: N-Dimethoxy(methyl)silylmethyl-O-methyl carbamate (stabiliser) 0.1-0.5 3-Aminopropyltrimethoxysilane (adhesion promoter)
0-2: Solution of a copolymer with a filler made of affinic groups (dimensional stabiliser)
3-10: Titanium dioxide (colouring agent)
1-2: Bis (2,2,6,6,-tetramethyl-4-piperidyl) sebacate and phenol, 2-(5-chloro-2H-benzotriazole-2-yl)-6-(1,1-dimethylethyl)-4-methyl (UV filters)
0-2: Biocide(s)

Another aspect of the present invention relates to a process for the preparation of the composition according to the embodiments of the present invention, which comprises the step of mixing the different components. Said mixing is preferably performed in a planetary mixer.

Another aspect of the present invention relates to the use of the composition according to the embodiments of the present invention in the adhesive bonding of objects on any substrate, allowing for the extraction of the objects when necessary.

The present invention also relates to the use of the composition according to the embodiments of the present invention in the flexible sealing of low-movement joints. Thus, it is possible to replace the sealant without the need to use tools or chemical cleaning products. In this context, "low-movement joints" are understood to mean joints with a constant movement lower than 12.5%.

The present invention also relates to the use of the composition according to the embodiments of the present invention in the temporary protective sealing of internal or external joints against moisture.

The present invention also relates to the use of the composition according to the embodiments of the present invention in the bonding or sealing of construction materials, such as, for example, ceramics, metal, wood, plastics, synthetic materials, natural stone. Thus, it is possible to recover them for their selective management as waste or for the re-use thereof.

### EXAMPLES

The following Examples are provided to explain and illustrate the present invention, and are not intended to limit the scope thereof.

| COMPOSITION (over 100 parts of polymer) | **1** | **2** | **3** | **4** |
|---|---|---|---|---|
| GENIOSIL STPE10® | 50 | 55.23 | 52.53 | 51.06 |
| SILOPHOBIC 200® | 17.20 | 15.39 | 14.01 | 14.47 |
| AEROSIL 150® | 0.00 | 0.22 | 0.50 | 0.52 |
| DINP | 8.88 | 13.20 | 14.98 | 15.00 |
| CRAYVALLAC SLX® | 1.84 | 2.20 | 2.50 | 2.58 |
| DYNASYLAN VTMO® | 2.46 | 4.40 | 3.99 | 4.14 |
| GENIOSIL XL65® | 0.62 | 0.82 | 1.00 | 1.03 |
| TITANIUM DIOXIDE | 3.68 | 7.00 | 5.99 | 6.03 |
| GENIOSIL GF96® | 0.12 | 0.22 | 0.40 | 0.41 |
| TIBKAT 216® | 0.25 | 0.22 | 0.20 | 0.20 |
| TINUVIN 326® | 1.23 | 1.10 | 1.00 | 1.03 |
| SOCAL 312® | 14.40 | 0.00 | 2.91 | 2.56 |

### RESULTS

| | | | | |
|---|---|---|---|---|
| 1. STRENGTH (N/mm²), BEECHWOOD/BEECHW OOD, 2 cm², 1 week 23°C | 1.93 | 1.95 | 2.42 | 1.90 |
| 2.% Breakage elongation, BEECHWOOD/BEECHW OOD, 2cm², 1 week 23°C | 0.58 | 0.58 | 0.76 | 0.64 |
| | | | | |
| 3.% ELONGATION AT BREAK 2-mm FILM, traction 200 mm/min | 229.00 | 233.00 | 227.00 | 232.00 |
| 4.BREAK FORCE 2-mm FILM, traction 200 mm/min (N/mm²) | 3.65 | 4.34 | 3.87 | 4.04 |
| | | | | |
| 5.SHORE A | 63.00 | 64.00 | 65.00 | 63.00 |

### Evaluation of removal capacity

### (Pine wood and vitrified ceramics)

| | |
|---|---|
| ++ Correct REMOVAL | The material is easily removed with a lever, without leaving any residues |
| + Sufficient REMOVAL | Correct removal, but too much leverage required |
| + - COHESIVE REMOVAL | Incorrect removal, because it leaves residues on the surface |
| -- INCORRECT REMOVAL | The product is not suitable |

### COMPOSITION

| | **1** | **2** | **3** | **4** |
|---|---|---|---|---|
| REMOVAL AS AN ADHESIVE | +- | ++ | ++ | ++ |
| REMOVAL AS A SEALANT | +- | ++ | ++ | ++ |

In order to facilitate the identification of the components, we indicate below the relationship between the components and the general definition thereof:

| | |
|---|---|
| GENIOSIL STP E-10: | Silane-terminated polyether |
| SILOPHOBIC 200®: | Hydrophobic colloidal precipitated pyrogenic silica |
| AEROSIL 150®: | Rheological additive with a hydrophilic pyrogenic silica base |
| DINP: | Plasticiser |
| CRAYVALLAC SLX®: | Polyamide-based rheology modifier |
| DYNASYLAN VTMO®: | Moisture absorber |
| GENIOSIL XL65®: | Stabiliser |
| TITANIUM DIOXIDE: | Colouring agent |
| GENIOSIL GF96®: | Adhesion promoter |
| TIBKAT 216®: | Catalyst |
| TINUVIN 326®: | UV Filter |
| SOCAL 312®: | Inert inorganic load in a colloidal Calcium Carbonate base. |

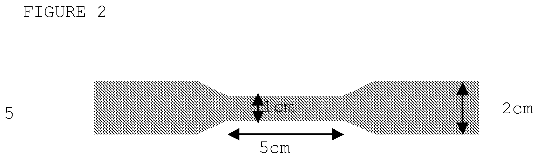

Description of the assays used:
1. STRENGTH (N/mm²), BEECHWOOD/BEECHWOOD, 2 cm², 1 week 23°C: tensile shear assay in dynamometric equipment. According to an internal assay method, 2 cm² of 2 beechwood pieces are overlapped and allowed to cure for 1 week under controlled temperature conditions. Subsequently, they are subjected to traction in order to evaluate the breakage strength of the bond.
2. % Elongation at break, BEECHWOOD/BEECHWOOD, 2 cm², 1 week 23°C: identical system to that of point 1. In this assay, the deformation % of the bond prior to breakage is evaluated.
3. % ELONGATION AT BREAKAGE, 2-mm FILM, traction 200 mm/min and
4. BREAK FORCE, 2-mm FILM, traction 200 mm/min (N/mm²). According to an internal method, 2-mm-thick product extensions are prepared and allowed to cure completely for 7 days at 23°C. Dumbbell test strips are die-cut (Figure 2) and subjected to traction in a dynamometric equipment in order to evaluate the deformation % of the film until breakage and the break Force.
5. SHORE A assay.
   On a completely cured film of elastic product, the surface hardness is evaluated on the basis of the elastic reaction thereof when a perpendicular puncture force is applied. This assay is performed using a SHORE A Durometer and it supplies hardness data on a scale from 0 to 100, 0 being the minimum and 100 being the maximum hardness. For more information about the Shore hardness assay, see http://es.wikipedia.org/wiki/Dureza Shore
6. Evaluation of removability,

### AS AN ADHESIVE

Two pieces of approx. 20 cm² overlapping 30% of the surface are bonded with the product of the invention.

From all the materials assayed, we supply information about pine wood and vitrified ceramics.

They are completely cured and a leverage is exerted by means of a spatula in order to separate the bonded parts.

The applied force in order to separate and remove the product from the surfaces assayed is evaluated.

### AS A SEALANT

Different types of 25 cm long, 90°-angle joints are created between different materials. The data supplied refer to joints between a vitrified ceramic substrate and solid pine wood strips.

The product of the invention is applied longitudinally on the joint to be assayed and smoothened with a soapy finger, leaving the joint perfectly watertight and sealed.

It is allowed to cure completely, for 7 days at 23°C, and, subsequently, the removability of the joint flange is evaluated. To this end, with the aid of a spatula, we raised the end of the flange to be removed and then exerted a force perpendicular to the surface in order to remove the entire flange. In this assay, we evaluated both the ease of removal of the flange and the product residues that may remain on the surfaces.

## Claims

1. Use of a composition comprising a polyether containing silane groups in the end of the chain or a polyether containing alcoxysilane radicals, at least one hydrophobic precipitated silica, at least one plasticiser, at least one polyamide-based rheology modifier, at least one moisture absorber, at least one aminosilane-type adhesion promoter, at least one colouring agent and at least one ultraviolet filter, wherein said composition is manually removable, as a sealant.

2. Use of a composition comprising a polyether containing silane groups in the end of the chain or a polyether containing alcoxysilane radicals, at least one hydrophobic precipitated silica, at least one plasticiser, at least one polyamide-based rheology modifier, at least one moisture absorber, at least one aminosilane-type adhesion promoter, at least one colouring agent and at least one ultraviolet filter, wherein said composition is manually removable, as a sealant and adhesive simultaneously.

3. Use according to claim 1 or 2, wherein the plasticiser in the composition is selected from DINP, DINCH, DIUP and benzoates. where DINP represents di-isononylphthalate, DINCH represents 1,2-cyclohexane dicarboxylic acid and DIUP represents di-isoundecylphthalte.

4. Use according to any of claims 1 to 3, wherein the rheology modifier in the composition is selected from micronised polyamide and heat-activateable castor oil derivatives.

5. Use according to any of claims 1 to 4, wherein the colouring agent in the composition is selected from titanium dioxide and an iron oxide-based pigment.

6. Use according to any of claims 1 to 5, wherein the composition further comprises one or more of at least one biocide, at least one rheological additive with a hydrophilic pyrogenic silica base, at least one tin catalyst and at least one dimensional stabiliser for silica.

7. Use according to any of claims 1 to 6, wherein the composition has the following formulation comprising (% by weight):
50-57: Dimethoxy(methyl)silylmethylcarbamate-terminated polyether
0-1.5: Rheological additive with a hydrophilic pyrogenic silica base, with a specific surface area of 150 m²/g
14-20: Hydrophobic amorphous colloidal silica (SiO₂ 80%-90%, polyalkylsiloxane 10%-20%)
0-0.25: Dioctyl tin dilaurate
8-15: DINP
0.1-5: Micronised polyamide
2-5: Vinyltrimethoxysilane
1-2: N-Dimethoxy(methyl)silylmethyl-O-methylcarbamate
0.1-0.5: 3-Aminopropyltrimethoxysilane
0-2: Solution of a copolymer with a filler made of affinic groups
3-10: Titanium dioxide
1-2: Bis (2,2,6,6,-tetramethyl-4-piperidyl) sebacate and phenol, 2-(5-chloro-2H-benzotriazole-2-yl)-6-(1,1-dimethylethyl)-4-methyl
0-2: Biocide(s)

8. Use of the composition according to any of claims 2 to 7, for the adhesion of objects on any substrate.

9. Use of the composition according to any of claims 1 to 7, for the flexible sealing of low-movement joints.

10. Use of the composition according to any of claims 1 to 7, for the temporary protective sealing of internal or external joints against moisture.

11. Use of the composition according to any of claims 1 to 7, for the bonding or sealing of construction materials.

## Patentansprüche

1. Verwendung einer Zusammensetzung, die einen Polyether, der im Ende der Kette Silangruppen enthält, oder einen Polyether, der Alkoxysilanreste enthält, zumindest eine hydrophobe gefällte Silika, zumindest einen Weichmacher, zumindest einen auf Polyamid basierenden Rheologiemodifizierer, zumindest einen Feuchtigkeitsabsorber, zumindest einen Haftungsförderer vom Aminosilan-Typ, zumindest ein Färbungsmittel und zumindest einen Ultraviolettfilter aufweist, wobei die Zusammensetzung manuell entfernbar ist, als Dichtungsmittel.

2. Verwendung einer Zusammensetzung, die einen Polyether, der im Ende der Kette Silangruppen enthält, oder einen Polyether, der Alkoxysilanreste enthält, zumindest eine hydrophobe gefällte Silika, zumindest einen Weichmacher, zumindest einen auf Polyamid basierenden Rheologiemodifizierer, zumindest einen Feuchtigkeitsabsorber, zumindest einen Haftungsförderer vom Aminosilan-Typ, zumindest ein Färbungsmittel und zumindest einen Ultraviolettfilter aufweist, wobei die Zusammensetzung manuell entfernbar ist, als Dichtungsmittel und als Haftungsmittel gleichzeitig.

3. Verwendung gemäß Anspruch 1 oder 2, bei der der Weichmacher in der Zusammensetzung aus DINP, DINCH, DIUP und Benzoaten ausgewählt ist,
wobei DINP Düsononylphthalat darstellt, DINCH 1,2-Cyclohexandicarbonsäure darstellt und DIUP Düsoundecylphthalat darstellt.

4. Verwendung gemäß einem der Ansprüche 1 bis 3, bei der der Rheologiemodifizierer in der Zusammensetzung aus mikronisiertem Polyamid und wärmeaktivierbaren Rizinusölderivaten ausgewählt ist.

5. Verwendung gemäß einem der Ansprüche 1 bis 4, bei der das Färbungsmittel in der Zusammensetzung aus Titandioxid und einem Pigment auf Eisenoxidbasis ausgewählt ist.

6. Verwendung gemäß einem der Ansprüche 1 bis 5, bei der die Zusammensetzung ferner eines oder mehrere aus zumindest einem Biozid, zumindest einem rheologischen Additiv mit einer hydrophilen pyrogenen Silikabasis, zumindest einem Zinnkatalysator und zumindest einem Dimensionsstabilisator für Silika aufweist.

7. Verwendung gemäß einem der Ansprüche 1 bis 6, bei der die Zusammensetzung die folgende Formulierung aufweist (in Gew .-%):
50 - 57: Dimethoxy(methyl)silylmethylcarbamat-terminierter Polyether
0 - 1,5: Rheologisches Additiv mit einer hydrophilen pyrogenen Silika mit einer spezifischen Oberfläche von 150 m²/g
14 - 20: Hydrophobe amorphe kolloidale Silika (SiO₂ 80 % - 90 %, Polyalkylsiloxan 10 % - 20 %)
0 - 0,25: Dioctylzinndilaurat
8 - 15: DINP
0,1 - 5: Mikronisiertes Polyamid
2 - 5: Vinyltrimethoxysilan
1 - 2: N-Dimethoxy(methyl)silylmethyl-O-methylcarbamat
0,1 - 0,5: 3-Aminopropyltrimethoxysilan
0 - 2: Lösung eines Copolymers mit einem Füllmittel aus affinen Gruppen
3 - 10: Titandioxid
1 - 2: Bis(2,2,6,6,-Tetramethyl-4-piperidyl)sebacat und Phenol, 2-(5-Chlor-2H-benzotriazol-2-yl)-6-(1,1-dimethylethyl)-4-methyl
0 - 2: Biozid(e)

8. Verwendung der Zusammensetzung gemäß einem der Ansprüche 2 bis 7 für die Anhaftung von Objekten auf einem beliebigen Substrat.

9. Verwendung der Zusammensetzung gemäß einem der Ansprüche 1 bis 7 für die flexible Abdichtung von Verbindungsstellen mit geringer Bewegung.

10. Verwendung der Zusammensetzung gemäß einem der Ansprüche 1 bis 7 für die temporäre Schutzabdichtung von internen oder externen Verbindungsstellen gegen Feuchtigkeit.

11. Verwendung der Zusammensetzung gemäß einem der Ansprüche 1 bis 7 für die Verbindung oder Abdichtung von Baumaterialien.

## Revendications

1. Utilisation d'une composition comprenant un polyéther contenant des groupes silanes en terminaison de la chaîne ou un polyéther contenant des radicaux alcoxysilanes, au moins une silice précipitée hydrophobe, au moins un plastifiant, au moins un modificateur de rhéologie à base de polyamide, au moins un absorbeur d'humidité, au moins un promoteur d'adhésion de type aminosilane, au moins un agent colorant et au moins un filtre à ultraviolets, dans laquelle ladite composition peut être retirée à la main, comme un enduit.

2. Utilisation d'une composition comprenant un polyéther contenant des groupes silanes en terminaison de la chaîne ou un polyéther contenant des radicaux alcoxysilanes, au moins une silice précipitée hydrophobe, au moins un plastifiant, au moins un modificateur de rhéologie à base de polyamide, au moins un absorbeur d'humidité, au moins un promoteur d'adhésion de type aminosilane, au moins un agent colorant et au moins un filtre à ultraviolets, dans laquelle ladite composition peut être retirée à la main, comme un enduit et un adhésif simultanément.

3. Utilisation selon une quelconque des revendications 1 ou 2, dans laquelle le plastifiant de la composition est sélectionné parmi le DINP, DINCH, DIUP et des benzoates.
dans laquelle DINP représente un di-isononylphthalate, DINCH représente un acide 1,2-cyclohexane dicarboxylique et DIUP représente un di-isoundecylphthalte.

4. Utilisation selon une quelconque des revendications 1 à 3, dans laquelle le modificateur de rhéologie de la composition est sélectionné dans du polyamide micronisé et des dérivés d'huile de ricin activables par chaleur.

5. Utilisation selon une quelconque des revendications 1 à 4, dans laquelle l'agent colorant de la composition est sélectionné dans du dioxyde de titane et pigment à base d'oxyde de fer.

6. Utilisation selon une quelconque des revendications 1 à 5, dans laquelle la composition comprend en outre un ou plusieurs d'au moins un biocide, au moins un additif rhéologique avec une base de silice pyrogène hydrophile, au moins un catalyseur étain et au moins un stabilisant dimensionnel pour la silice.

7. Utilisation selon une quelconque des revendications 1 à 6, dans laquelle la composition comporte la formulation suivante comprenant (en % de poids) :
50-57 : Polyéther à terminaison Diméthoxy(méthyl)silylméthylcarbamate
0-1,5 : Additif rhéologique avec base silice pyrogène hydrophile, avec une surface spécifique de 150 m²/g
14-20 : Silice colloïdale hydrophobe amorphe (SiO₂ 80%-90%, polyalkylsiloxane 10%-20%)
0-0,25 : dilaurate d'étain dioctyle
8-15: DINP
0,1-5 : Polyamide micronisé
2-5 : Vinyltriméthoxysilane
1-2 : N-Diméthoxy(méthyl)silylméthyl-0-méthyl- carbamate
0,1-0,5 : 3-Aminopropyltriméthoxysilane
0-2 : Solution d'un copolymère avec un mastic constitué de groupes affiniques.
3-10 : Dioxyde de titane
1-2 : Bis (2,2,6,6,-tétraméthyl-4-pipéridyl) sébacate et phénol, 2-(5-chloro-2H-benzotriazole-2-yl)-6-(1,1-diméthyléthyl)-4-méthyl
0-2 : Biocide(s)

8. Utilisation de la composition selon une quelconque des revendications 2 à 7 pour l'adhésion d'objets sur n'importe quel substrat.

9. Utilisation de la composition selon une quelconque des revendications 1 à 7 pour le scellement souple de joints à faible mouvement.

10. Utilisation de la composition selon une quelconque des revendications 1 à 7 pour l'étanchéité protectrice temporaire de joints internes ou externes contre l'humidité.

11. Utilisation de la composition selon une quelconque des revendications 1 à 7 pour le jointement ou le scellement de matériaux de construction.
